Europäisches Patentamt

European Patent Office

Office européen des brevets

(11) Publication number: **0 129 341**
**B1**

# EUROPEAN PATENT SPECIFICATION

(45) Date of publication of patent specification: **21.01.87**

(21) Application number: **84303415.8**

(22) Date of filing: **21.05.84**

(51) Int. Cl.⁴: **F 16 H 3/08**

(54) Dual input clutch transmission.

(30) Priority: **16.06.83 US 504794**

(43) Date of publication of application:
**27.12.84 Bulletin 84/52**

(45) Publication of the grant of the patent:
**21.01.87 Bulletin 87/04**

(84) Designated Contracting States:
**DE FR GB IT SE**

(56) References cited:
**EP-A-0 029 711**
**EP-A-0 090 674**

(73) Proprietor: **GENERAL MOTORS CORPORATION**
**General Motors Building**
**3044 West Grand Boulevard**
**Detroit Michigan 48202 (US)**

(72) Inventor: **Koivunen, Erkki Antero**
**15560 Westbrooke**
**Livonia Michigan 48154 (US)**

(74) Representative: **Breakwell, John Neil Bower**
**et al**
**GM Patent Section Luton Office (F6)**
**P.O. Box No. 3 Kimpton Road**
**Luton Beds. LU2 OSY (GB)**

Courier Press, Leamington Spa, England.

## Description

This invention relates to a dual input clutch transmission as specified in the preamble of claim 1, for example as disclosed in GB—A—2,064,028.

Prior-art dual input clutch transmissions have two input shafts, each of which is controlled for connection to the engine-driven drive shaft by a respective selectively engageable input clutch. One input shaft has drivingly associated therewith the odd-numbered gear ratios, whereas the other input shaft has associated therewith the even-numbered gear ratios.

As is well-known, with such transmissions a ratio can be established between each input shaft and the transmission output shaft simultaneously. The determining factor as to which ratio is in fact effective is the engagement of the input clutch with the respective input shaft. Therefore, for example, to change from first ratio to second ratio it is merely necessary to interchange the input clutches. At this point, the third ratio can be made effective as the first ratio is disconnected. A change from third to second ratio can then be effected by merely interchanging the input clutches.

A ratio change can also be effected from third ratio to fourth ratio. However, since the first and third ratio gears are drivingly connected to the same input shaft, and the second and fourth ratio gears are drivingly connected to the other input shaft, a direct downshift (so-called skip shift) from third to first ratio or from fourth to second ratio cannot be achieved without disconnecting both input clutches.

The present invention is concerned with the provision of a dual input clutch transmission which will permit direct third to first ratio or fourth to second ratio downshifts (skip shifts).

To this end, a dual input clutch transmission in accordance with the present invention is characterised by the measures specified in the characterising portion of claim 1.

Thus the desired result is achieved in essence by the use of duplicate first and second ratio gear sets on the respective input shafts. With such an arrangement, a pair of input shafts are selectively connectible to a transmission output shaft by means of a plurality of ratio gear sets, with one input shaft being utilized for the first, second and third ratios, whereas the other input shaft is utilized for first, second and fourth ratios, thereby permitting a vehicle operator to select a direct third to first ratio downshift or a direct fourth to second ratio downshift when such are desired.

Thereby, a direct ratio-change downshift from fourth to second ratio can be accomplished by establishing the second ratio relative to the one input shaft while the fourth ratio is operating through the other input shaft: by interchange of the input clutches, a fourth to second downshift will occur. After the downshift has occurred, the second gear ratio can be established between both input shafts and the output shaft, whereupon the second gear ratio used for the downshift can be disestablished so that the first or third gear ratio can be utilized should an upshift or downshift from the second ratio be desired.

In the drawing:

Figure 1 is a schematic representation showing one embodiment of a dual input clutch transmission in accordance with the present invention; and

Figure 2 is a schematic representation showing another embodiment of a dual input clutch transmission in accordance with the present invention.

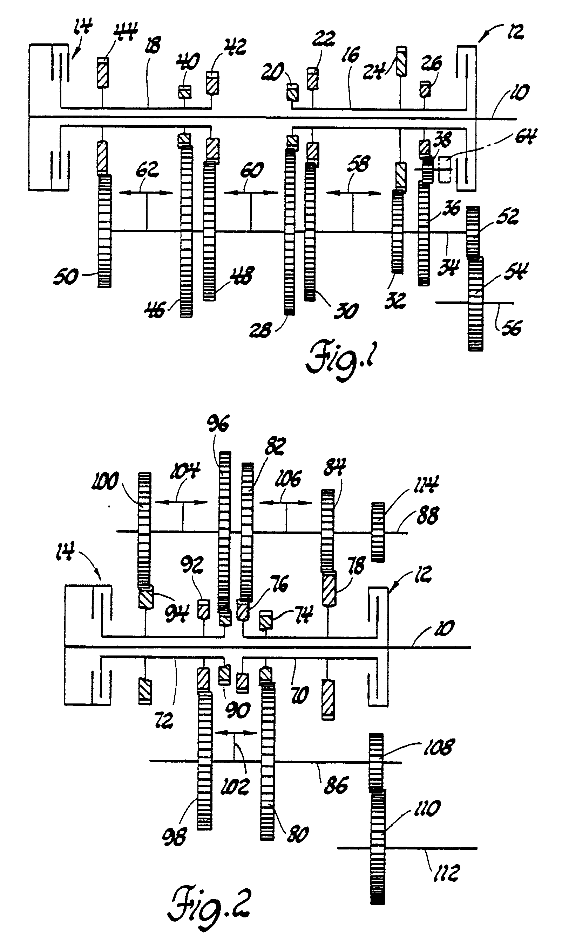

With reference now to the drawing, there is shown in Figure 1 a dual input clutch transmission arrangement having a drive shaft 10 (adapted to be driven by a vehicle engine, not shown) to which is drivingly connected a pair of selectively engageable input clutches 12 and 14. The input clutch 12 is also drivingly connected to a transmission input shaft 16, and correspondingly the input clutch 14 is also drivingly connected to a transmission input shaft 18. The transmission input shaft 16 has drivingly connected thereto a plurality of ratio drive gears 20, 22, 24 and 26. The ratio drive gears 20, 22 and 24 mesh with ratio driven gears 28, 30 and 32 respectively, and are sized to provide first, second and fourth drive ratios respectively. The driven ratio gears 28, 30 and 32 are rotatably supported on a transmission output shaft 34. A reverse gear 36 is drivingly connected to the output shaft 34, and is selectively connectible to the drive gear 26 by way of an idler gear 38 that is movable into and out of mesh with the gears 36 and 26 in a well-known manner.

The transmission input shaft 18 has drivingly connected thereto a plurality of ratio drive gears 40, 42 and 44 which mesh with ratio driven gears 46, 48 and 50, respectively. The ratio driven gears 46, 48 and 50 are rotatably supported on the transmission output shaft 34. The transmission output shaft 34 has drivingly connected thereto a final drive gear 52 which meshes with an output gear 54 that is drivingly connected to a driven shaft 56. The driven shaft 56 is adapted to be connected to the vehicle drive wheels or to a differential, not shown, in known manner.

The gear set 40—46 is the same size as the gear set 20—28 and will therefore likewise provide the first gear ratio. The gear set 42—48 is the same size as the gear set 22—30 and will therefore likewise provide the second gear ratio. The gear set 44—50 can provide a third gear ratio.

The ratio driven gears 30 and 32 are selectively connectible to the transmission output shaft 34 by way of a selectively engageable clutch mechanism 58, which can be considered to be a second or fourth ratio clutch. The gears 28 and 48 are selectively connectible to the transmission output shaft 34 by way of a selectively engageable clutch mechanism 60, which can be considered to be a first or second ratio clutch. The gears 46 and 50 are selectively connectible to the transmission output, shaft 34 by way of a selectively engageable clutch mechanism 62, which can be considered to be a first or third ratio clutch.

In the general operating sequence, the clutch mechanism 62 will connect the gear 46 to the transmission output shaft 34 to establish the first gear ratio. Vehicle movement will be occasioned by engagement of the input clutch 14, which will drivingly connect the drive shaft 10 to the transmission input shaft 18. Since the input clutch 12 is disengaged, the transmission input shaft 16 is unloaded.

The clutch mechanism 58 can then be utilized to selectively connect the gear 30 to the transmission output shaft 34, to establish the second gear ratio. To establish a drive from the drive shaft 10 in the second gear ratio, the input clutch 14 is disengaged and the input clutch 12 is engaged.

The clutch mechanism 62 may then be disengaged from the gear 46 and engaged with the gear 50, to establish the third ratio utilizing the gears 44 and 50. To establish a drive from the drive shaft 10 in the third gear ratio, the input clutch 12 is disengaged and the input clutch 14 is engaged.

After disengagement of the input clutch 12, the clutch mechanism 58 can be disengaged from the gear 30 and engaged with the gear 32, to establish the fourth ratio. To establish a drive from the drive shaft 10 in the fourth ratio, the input clutch 14 is disengaged and the input clutch 12 is engaged.

During all these drive ratios, the reverse idler gear 38 would be maintained in the illustrated phantom position 64, out of engagement with the gears 26 and 36.

If it is desirable, due to operating conditions, to downshift the transmission direct from fourth ratio to second ratio, the clutch mechanism 60 is engaged with the gear 48, thus establishing the second gear ratio between the transmission input shaft 18 and the transmission output shaft 34. To complete the downshift, the input clutch 12 is disengaged and the input clutch 14 is engaged.

After disengagement of the input clutch 12, the clutch mechanism 58 can be disengaged from the gear 32 and engaged with the gear 30, thus establishing the second gear ratio between the transmission input shaft 16 and the transmission output shaft 34. After such clutch engagement, the input clutches 14 and 12 can be interchanged. The transmission is thereby conditioned for a second to first downshift or a second to third upshift, depending on operating requirements.

If the vehicle is operating in third gear with the clutch mechanism 62 engaging the gear 50 and the input clutch 14 engaged, a direct third to first downshift can be accomplished by engaging the clutch mechanism 60 with the gear 28 and then interchanging the input clutches 12 and 14. After the input clutch 14 is disengaged, the clutch mechanism 62 can be disengaged from the gear 50 and engaged with the gear 46 to establish the first gear ratio. After this clutch change, the input clutches 12 and 14 can be interchanged so that the transmission is prepared for a first to second upshift.

The input clutches 12 and 14 are preferably fluid-operated friction clutches; however, mechanical, pneumatic or electrical clutch operation could alternatively be utilized. Mechanisms for controlling such clutches are well-known and easily adaptable to the present transmission.

The clutch mechanisms 58, 60 and 62 are preferably mechanical synchronizer-type clutches, which can be operated manually, electrically, hydraulically or pneumatically in a well-known manner. Alternatively, if desired, friction-type clutches could be utilized in these locations also.

The transmission shown in Figure 2 is similar to that shown in Figure 1 but occupies less overall length and would require a larger housing diameter. This Figure 2 transmission likewise has a drive shaft 10 to which is drivingly connected a pair of input clutches 12 and 14. The input clutch 12 is drivingly connected to an input shaft 70, and the input clutch 14 is drivingly connected to an input shaft 72. The input shaft 70 has drivingly connected thereto ratio drive gears 744, 76 and 78 which mesh with ratio driven gears 80, 82 and 84 respectively, for establishing first, second and fourth ratios respectively. The ratio driven gear 80 is rotatably supported on a transmission output shaft 86, and the ratio driven gears 82 and 84 are rotatably supported on a transmission output shaft 88.

The transmission input shaft 72 has drivingly connected thereto a plurality of ratio drive gears 90, 92 and 94 which are in mesh with ratio driven gears 96, 98 and 100 respectively, for establishing first, second and third ratios respectively. The ratio driven gear 98 is rotatably supported on the output shaft 86. A ratio clutch mechanism 102 is disposed on the shaft 86 and is operable to selectively connect the gear 80 or the gear 98 to the shaft 86. The ratio driven gears 96 and 100 are rotatably supported on the output shaft 88, and can be selectively connected thereto by means of a ratio clutch mechanism 104. A ratio clutch mechanism 106 is provided to selectively connect the gears 82 and 84 to the transmission output shaft 88.

The transmission output shaft 86 has connected thereto a drive gear 108 which meshes with an output driven gear 110 connected to a driven shaft 112 of the vehicle. The transmission output shaft 88 has drivingly connected thereto a drive gear 114 which meshes with the driven gear 110. Thus both transmission output shafts 86 and 88 are drivingly connected to the vehicle's driven shaft 112.

By selective actuation of the clutch mechanisms 102 and 106, first, second and fourth ratios can be established between the drive shaft 10 and the vehicle drive shaft 112 when the input clutch 12 is engaged. Correspondingly, by selective actuation of the clutch mechanisms 102 and 104, first, second and third gear ratios can be established between the drive shaft 10 and the vehicle's driven shaft 112 when the input clutch 14 is engaged.

By selective interchange of the clutch mechanisms 104 and 106 and of the input clutches 12 and 14, the transmission can be conditioned to operate between first and fourth gear ratios in a manner similar to that described for Figure 1. By the use of the clutch mechanism 102 and interchange of the input clutches 12 and 14, a direct fourth to second or third to first downshift can be achieved in a manner similar to that described.

The use of two transmission output shafts 86 and 88 reduces the axial length of the transmission, although with this arrangement the transmission housing would be larger in cross-sectional area.

From the above operating analysis of the transmissions shown in Figures 1 and 2, it will be evident that a direct first to third or second to fourth upshift are also in principle available, although these manoeuvres are not generally utilized in transmission operation. There are, however, a considerable number of operating conditions during which a direct fourth to second or third to first downshift is desirable. With conventional dual clutch transmissions, such downshift patterns are not achievable. Therefore, the present invention makes available an increased operating scope for the transmission.

If required, a reverse ratio similar to that of Figure 1 could be included in the transmission represented in Figure 2.

## Claims

1. A dual input clutch transmission in which a pair of input clutches (12, 14) are selectively operable to connect a drive shaft (10) to respective ones of a pair of input shafts (16, 18; 70, 72), a plurality of ratio gears (22, 24 and 40, 44; 76, 78 and 90, 94) are drivingly connected to respective ones of the input shafts (16 and 18; 70 and 72), a plurality of driven gears (30, 32 and 46, 50; 82, 84 and 96, 100) are rotatably supported on an output shaft (34; 88) and mesh with respective ones of the ratio gears on the input shafts, and a plurality of mechanical clutch means (58, 62; 106, 104) are selectively engageable for drivingly connecting selected ones of the driven gears (30, 32, 46, 50; 82, 84, 96, 100) to the output shaft (34; 88) to selectively provide first, second, third and fourth ratios between the drive shaft (10) and the output shaft (34; 88), the latter working on an output means (54, 56; 110, 112), characterised by the provision of additional gear sets (20, 28 and 42, 48; 74, 80 and 92, 98) and a further mechanical clutch means (60; 102) in such a way that the one ratio gear set (42, 48; 92, 98) comprises an additional second ratio drivingly connected to one (18; 72) of the input shafts (16, 18; 70, 72) and the other ratio gear set (20, 28; 74, 80) comprises an additional first ratio drivingly connected to the other (16; 70) of the input shafts (16, 18; 70, 72) with said further mechanical clutch means (60; 102).

2. A dual input clutch transmission according to claim 1, characterised in that the further mechanical clutch means (60) and the gears (28, 48) of the additional gear sets (20, 28 and 42, 48) are provided on the output shaft (34).

3. A dual input clutch transmission according to claim 1, characterised in that the further mechanical clutch means (102) and the gears (80, 98) of the additional gear sets (74, 80 and 92, 98) are provided on a further output shaft (86) working on the output means (110, 112).

## Patentansprüche

1. Doppeleingangs-Kupplungsgetriebe, bei dem zwei Eingangskupplungen (12, 14) wahlweise zur Verbindung einer Antriebswelle (10) mit jeweils einer von zwei Eingangswellen (16, 18; 70, 72) betätigbar sind, eine Vielzahl von Übersetzungszahnrädern (22, 24 und 40, 44; 76, 78 und 90, 94) antriebsmäßig mit einer jeweiligen der Antriebswellen (16 und 18; 70 und 72) verbunden sind, eine Vielzahl von angetriebenen Zahnrädern (30, 32 und 46, 50; 82, 84 und 96, 100) drehbar an einer Ausgangswelle (34; 88) abgestützt sind und mit jeweiligen der Übersetzungszahnräder an den Eingangswellen kämmen und eine Vielzahl von mechanischen Kupplungsmitteln (58, 62; 106, 104) wahlweise zur antriebsmäßigen Verbindung ausgewählter von den angetriebenen Zahnrädern (30, 32, 46, 50; 82, 84, 96, 100) mit der Ausgangswelle (34; 88) in Eingriff bringbar sind, um wahlweise erste, zweite, dritte und vierte Übersetzungsverhältnisse zwischen der Antriebswelle (10) und der Ausgangswelle (34; 88) zu schaffen, wobei die letztere auf ein Ausgangsmittel (54, 56; 110, 112) arbeitet, gekennzeichnet durch das Vorsehen von zusätzlichen Zahnradsätzen (20, 28 und 42, 48; 74, 80 und 92, 98) und eines weiteren mechanischen Kupplungsmittels (60; 102) in solcher Weise, daß ein Übersetzungs-Zahnradsatz (42, 48; 92, 98) ein zusätzliches zweites Übersetzungsverhältnis, antriebsmäßig mit einer (18; 72) der Eingangswellen (16, 18; 70, 72) verbunden, umfaßt und der andere Übersetzungszahnradsatz (20, 28; 74, 80) ein zusätzliches erstes Übersetzungsverhältnis, antriebsmäßig mit der anderen (16; 70) der Eingangswellen (16, 18; 70, 72) mit dem weiteren mechanischen Kupplungsmittel (60; 102) verbunden, umfaßt.

2. Doppeleingangs-Kupplungsgetriebe nach Anspruch 1, dadurch gekennzeichnet, daß das weitere mechanische Kupplungsmittel (60) und die Zahnräder (28, 48) der zusätzlichen Zahnradsätze (20, 28 und 42, 48) an der Ausgangswelle (34) vorgesehen sind.

3. Doppeleingangs-Kupplungsgetriebe nach Anspruch 1, dadurch gekennzeichnet, daß das weitere mechanische Kupplungsmittel (102) und die Zahnräder (80, 98) der zusätzlichen Zahnradsätze (74, 80 und 92, 98) an einer weiteren, auf das Ausgangsmittel (110, 112) arbeitenden Ausgangswelle (86) vorgesehen sind.

## Revendications

1. Dispositif de transmission à deux embrayages d'entrée, comportant un couple d'embrayages (12, 14) susceptibles d'être actionnés à volonté pour accoupler un arbre menant (10) aux arbres particuliers d'un couple d'arbres d'entrée (16, 18; 70, 72), plusieurs pignons de rapport de vitesse (22, 24 et 40, 44; 76, 78 et 90, 94) accouplés aux arbres d'entrée particuliers (16 et 18; 70 et 72), plusieurs pignons menés (30, 32 et 46, 50; 82, 84 et 96, 100) tournant sur un arbre de sortie (34; 88) et engrènant avec ceux correspondants des pignons de rapport de vitesse des arbres d'entrée et plusieurs dispositifs d'accouplement mécaniques (58, 62; 106, 104) susceptibles d'être accouplés à volonté pour entraîner ceux sélectionnés des pignons menés (30, 32, 46, 50; 82, 84, 96, 100) à l'arbre de sortie (34; 88) pour donner de manière sélective les premier, deuxième, troisième et quatrième rapports entre l'arbre menant (10) et l'arbre de sortie (34; 88), ce dernier agissant sur des moyens de sortie (54, 56; 110, 112), caractérisé en ce qu'il est prévu des trains d'engrenages supplémentaires (20, 28 et 42, 48; 74, 80 et 92, 98) et un autre dispositif d'accouplement mécanique (60; 102) de telle façon que ce train d'engrenages de rapport de vitesse (42, 48; 82, 98) comprenne un second rapport supplémentaire accouplé à l'un (18; 72) des arbres d'entrée (16, 18; 70, 72), et que l'autre train d'engrenages de rapport de vitesse (20, 28; 74, 80) comprenne un premier rapport supplémentaire accouplé à l'autre (16, 70) des arbres d'entrée (16, 18; 70, 72), à l'aide de cet autre dispositif d'accouplement mécanique (60; 102).

2. Dispositif de transmission à deux embrayages d'entrée suivant la revendication 1, caractérisé en ce que l'autre dispositif d'accouplement mécanique (60) et les pignons (28, 48) des trains d'engrenages supplémentaires (20, 28 et 42, 48), sont disposés sur l'arbre de sortie (34).

3. Dispositif de transmission à deux embrayages d'entrée, suivant la revendication 1, caractérisé en ce que l'autre dispositif d'accouplement mécanique (102) et les pignons (80, 98) des trains d'engrenages supplémentaires (74, 80 et 92, 98), sont disposés sur un autre arbre de sortie (86) agissant sur les moyens de sortie (110, 112).

Fig.1

Fig.2